# EUROPEAN PATENT SPECIFICATION

(11) **EP 1 503 176 B1**
(45) Date of publication and mention of the grant of the patent: **03.05.2017**
(21) Application number: 04254398.3
(22) Date of filing: 23.07.2004
(51) Int. Cl.: G01C 1/04, G01C 15/06

(54) **Survey guiding system**
Vermessungsleitsystem
Système de guidage de topométrie

(30) Priority: 23.07.2003 JP 2003200433
(43) Date of publication of application: 02.02.2005
(73) Proprietor: Kabushiki Kaisha TOPCON, Tokyo-to (JP)
(72) Inventor: Ohtomo, Fumio, c/o Kabushiki Kaisha Topcon, Tokyo-to (JP); Omori, Makoto, c/o Kabushiki Kaisha Topcon, Tokyo-to (JP); Kumagai, Kaoru, c/o Kabushiki Kaisha Topcon, Tokyo-to (JP)
(74) Representative: Hale, Peter

(56) References cited:
- EP-A2- 1 176 429
- WO-A-2004/057269
- US-A- 5 512 905
- US-A1- 2003 046 003

## Description

### BACKGROUND OF THE INVENTION

The present invention relates to a survey operation guiding system for giving guidance to an operator engaging in operation, e.g. an operation to determine a survey setting point.

As the surveying operation, there are types of operation: a survey setting operation for searching a predetermined position and for driving piles, and a ready type surveying operation for measuring an adequate position within a predetermined range.

The survey setting operation is carried out in a wide range from general surveying operation to the field of civil engineering, and it is an operation for driving piles at site. The survey setting operation consists of an operation for moving to a survey setting point as a target and an operation for determining the survey setting point as a target and for driving a pile on the survey setting point.

First, guidance is given to the survey setting point as a target, and the survey setting point for driving a pile is determined. At present, as a device for carrying out the guidance, a total station or a GPS system is used. Further, it is now possible to determine the survey setting point as a target quickly and easily by using a computer-aided system.

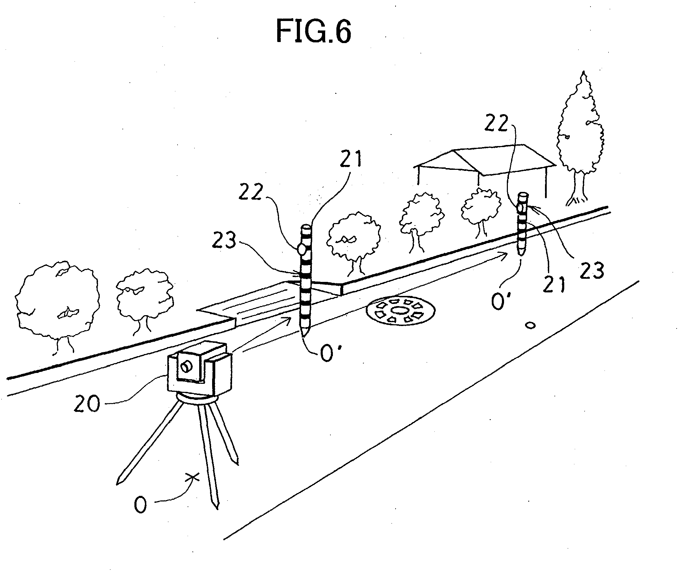

Fig. 6 shows an example of such a surveying system. In Fig. 6, reference numeral 20 denotes a total station, 21 denotes a pole, and 22 represents a prism. The pole 21 and the prism 22 make up together a surveying target 23.

The total station 20 is installed at a given point (a known point) O, and the surveying target 23 is erected at a point to be obtained (a survey setting point as target) (O'. Normally, an operator is assigned each on the total station 20 side and on the pole 21 side. The operator on the pole 21 side moves the pole 21 to the point to be obtained O' according to an instruction from the operator on the total station 20 side. In the surveying operation, the prism 22 of the pole 21 positioned at the point to be obtained O' is collimated by using the total station 20. Then, by measuring a distance and an angle, a horizontal coordinate position of the point to be obtained O' is determined.

The horizontal coordinate position of the point to be obtained O' is stored in the total station 20, and a pile is driven at the point to be obtained O'. Further, an instruction of the next destination is given to the operator on the survey target 23 side. Then, the operator on the total station 20 side determines a distance and a direction angle to the pole 21 at one destination after another. The points to be obtained 0' are determined one after another. Piles are driven at the points to be obtained O', and this procedure is repeated.

In contrast, in the ready type surveying operation, predetermined points on the ground are measured and a difference from a designed plane is obtained. The operator on the pole 21 side is guided to a point (point to be surveyed) from the total station 20 side. The operator on the pole 21 side moves the pole 21 side to the point to be surveyed according to the instruction from the total station 20 side. The operator on the total station 20 side obtains a distance and a direction angle of the pole 21 at the destination. The surveyed values are compared with the operation values already stored (recorded). In recent years, as the means for carrying out position measurement, a GPS system is also used instead of the total station.

In the surveying operation as described above, the operation is performed by two operators, one each on the total station 20 side and on the pole 21 side. Also, the operators must have mutual contact constantly with each other. This is troublesome work and imposes heavy burden on the operators both mentally and physically. In case of a skilled operator, surveying operation can be carried out completely within 1 - 3 minutes for one surveying point. During this period, the operator on the pole 21 side must be careful at all times about his own position and the point to be obtained, which is used as the target. The information on his own position and on the point to be obtained is given only by the instruction and the information from the operator on the total station 20 side. The operator on the pole 21 side has often difficulty to perform the operation by his own judgment, and there has been such problem that working efficiency is poor.

United States patent, serial no US 5,512,905 discloses a surveyor range pole, for example, equipped with a GPS receiver and antenna mounted at the top end, a battery mounted at the bottom end to better balance the pole, a tilt sensor and a direction sensor. The tilt sensor and direction sensor provide information about the vector that lies between the top and the bottom points of the range pole. The GPS receiver computes the position of the top end of the range pole from GPS satellite signals received by the GPS at the top end, and then computes the position of the bottom end of the range pole with the vector information. A variable length, telescoping range pole includes a linear transducer for automatically measuring the overall length of the range pole and contributing that length information to the vector calculation. displayed on the display device.

One aspect of the invention provides surveying guide system according to claim 1.

Other aspects of the invention are defined in the dependent claims.

### BRIEF DESCRIPTION OF THE DRAWINGS

Fig. 1 is a front view of a first embodiment of the present invention;
Fig. 2 is a schematical block diagram of the first embodiment of the present invention;
Fig. 3 (A), Fig. 3 (B), and Fig. 3 (C) each represents a drawing to explain operation of the first embodiment;
Fig. 4 is a front view of a second embodiment of the present invention;
Fig. 5 is a schematical block diagram of the second embodiment of the present invention; and
Fig. 6 is a perspective view to explain a conventional example.

### DETAILED DESCRIPTION OF THE PREFERRED EMBODIMENTS

Description will be given below on embodiments of the present invention referring to the drawings.

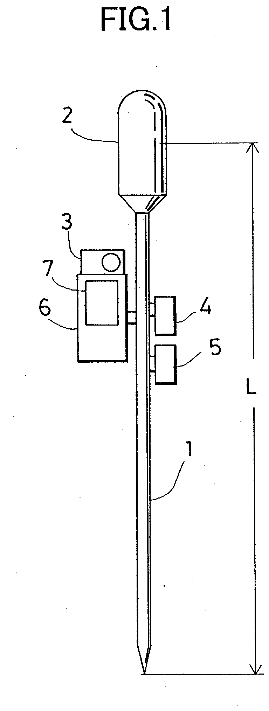

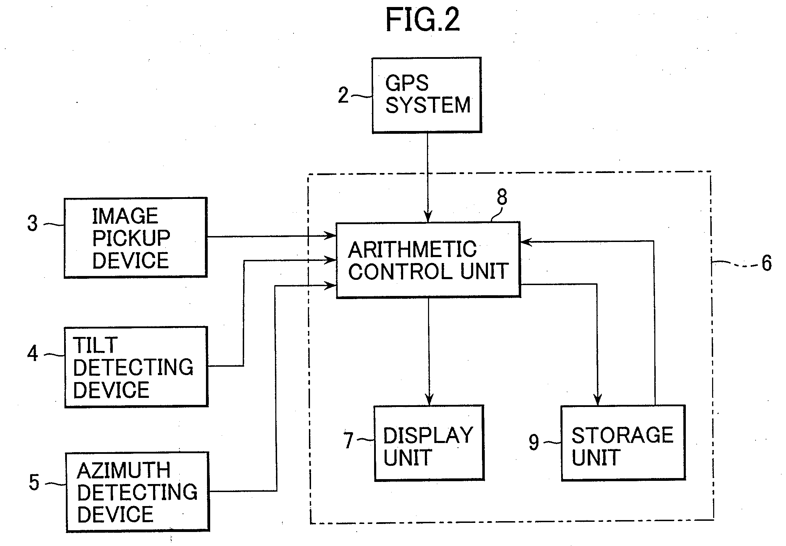

First, description will be given on a first embodiment of the invention referring to Fig. 1 and Fig. 2.

According to the present invention, an operation, e.g. a survey setting operation, is performed by an operator, who operates a pole.

A pole 1 erected and carried by the operator has a tapered point as its lower end so that the pole can be erected at a survey setting point. A GPS system 2 is provided on an upper end of the pole 1. An image pickup device 3 is mounted at a position of a predetermined height position on the pole 1, e.g. at the position of a visual line of the operator. On an upper portion of the pole 1, a tilt detecting device 4, an azimuth detecting device, e.g. an azimuth angle sensor 5, and an arithmetic processing unit 6 are provided.

The GPS system 2 as described above is a position detecting system, which utilizes a GPS (global positioning system). The image pickup device 3 is a digital camera, a digital video camera, etc. The tilt detecting device 4 can detect a tilt angle and a tilting direction of the pole 1 with respect to the vertical line. The azimuth angle sensor 5 can detect azimuth of a collimating direction of the image pickup device 3. A position signal from the GPS system 2, an image signal from the image pickup device 3, a tilt angle signal from the tilt detecting device 4, and an azimuth angle signal from the azimuth angle sensor 5 are inputted to the arithmetic processing unit 6.

The arithmetic processing unit 6 is a digital device of such size that the operator can handle it by a single hand. This includes a portable type information terminal unit, e.g. PDA (personal digital assistance), which comprises a display unit 7, an arithmetic control unit 8, and a storage unit 9. In the storage unit 9, various types of data are stored such as topographic data, position data of a survey setting point, operation data such as code name assigned to each survey setting point, and a distance L of the GPS system 2 from the tapered end of the pole 1.

In the storage unit 9, programs are stored, and these programs include such as: a signal processing program for displaying positional data and azimuth of the setting point, and the positional signal detected by the GPS system 2 as coordinate data to the display unit 7; an image processing program for displaying an pickup image of the image pickup device 3 based on an image signal from the image pickup device 3, and for displaying azimuth, operation planning data, a coordinate image obtained based on the operation planning data, and a position of the pole 1, etc. either in superimposed manner on the pickup image or individually; an arithmetic operation program for correcting the positional data detected by the GPS system 2 based on the tilt from the tilt detecting device 4 and the distance L.

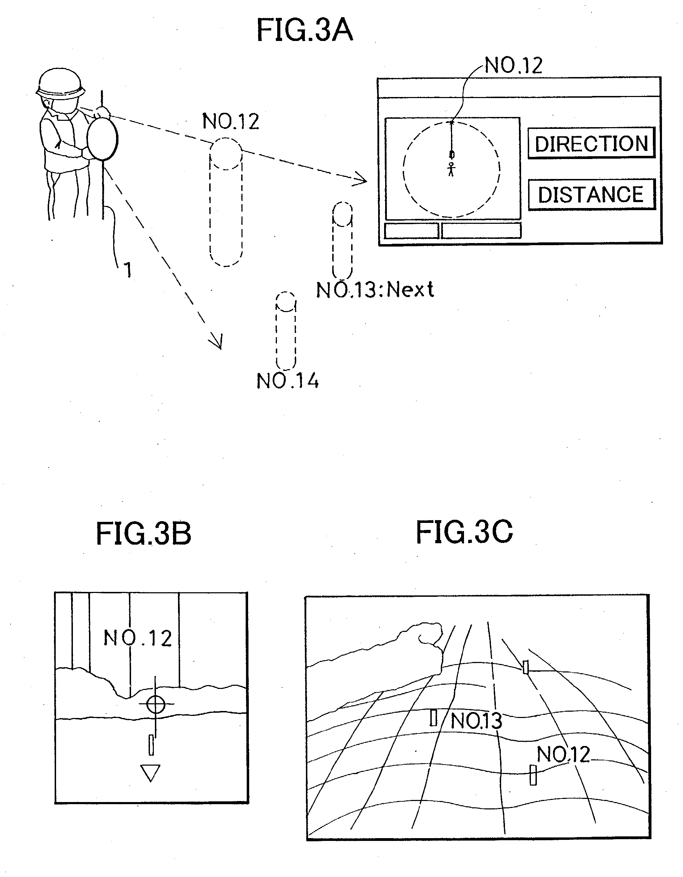

Now, description will be given on operation referring to Fig. 3.

When the arithmetic processing unit 6 is operated, signals from the GPS system 2, the image pickup device 3, the tilt detecting device 4, and the azimuth angle sensor 5 are respectively incorporated in the arithmetic processing unit 6. The positional data detected by the GPS system 2 is corrected to match a position indicated by the tapered point of the pole 1 (position of the pole 1) based on the tilt angle signal from the tilt detecting device 4 and on the distance L.

On the display unit 7, the coordinate image is displayed based on the operation planning data. On the coordinate image, the corrected positional data of the pole 1, the survey setting point and the azimuth are displayed as coordinate data (Fig. 3 (A)). For instance, on the coordinate image with the position of the pole 1 as the center of coordinate, a survey setting point for the next pile driving is displayed. On the coordinate image, the present position and the next survey setting point are displayed each by using a symbol or a dot. Also, a distance and a direction are displayed as numerical data through a comparison of the present position with the next survey setting point. From this coordinate image, the operator can obtain general information as to at which azimuth and how distant the next targeted survey setting point is from the present position.

An optical axis (collimating direction) of the image pickup device 3 is directed toward the next survey setting point (e.g. code name No. 12), and an image is taken by the image pickup device 3. The display of the display unit 7 is switched over, and a pickup image is displayed. On the display unit 7, a pickup image around the survey setting point (No. 12) is displayed. A symbol or an indication mark to show the survey setting point (No. 12) is displayed by superimposing on the pickup image (Fig. 3 (B)).

By comparing the scene currently observed by the operator with the pickup image, the operator can easily identify an approximate position of the survey setting point (No. 12) displayed on the pickup image, and the operator can quickly move to the survey setting point (No. 12).

It is also possible to display the operation planning data by superimposing it on the pickup image, and all survey setting points for pile driving in the survey setting operation can be displayed (Fig. 3 (C)). The operator can carry out pile driving by keeping the next operation stage in mind, and this contributes to the improvement of working efficiency.

When the approximate position of the pole 1 is determined, the coordinate image is displayed again. On the coordinate image, the position of the pole 1 is displayed at real time, and the survey setting point (No. 12) is on display. By displaying the coordinate image through enlargement, the operator can easily obtain information on the difference of the present position of the pole 1 from the survey setting point (No. 12), and the position of the pole can be corrected. The pole 1 can be easily and quickly erected at the survey setting point, and this is helpful for the operator to facilitate the determination of the survey setting point and pile driving.

By inputting the completion of pile driving operation at the survey setting point (No. 12) to the arithmetic control unit 8, the arithmetic control unit 8 reads the data relating to the next survey setting point (No. 13) from the storage unit 9. Thus, pile driving operation at the survey setting point can be carried out one after another by a single operator in quick and easy manner.

In the operation as described above, the coordinate image is displayed at first, and the approximate collimating direction of the image pickup device 3 is determined, while it is also possible to pick up the image at once from the image pickup device 3 and to search the survey setting point (No. 12) from the pickup image.

When image pickup operation is started, the image pickup direction is detected by the azimuth angle sensor 5, and the position of the pole 1 is detected by the GPS system 2. The arithmetic control unit 8 obtains the survey setting point existing in the image pickup direction from the position of the pole 1, and the corresponding survey setting point is displayed on the pickup image. The operator confirms the survey setting point displayed on the image and can move quickly to the survey setting point. In case there is no survey setting point in the image pickup direction immediately after the starting of the image pickup operation, the pole 1 should be rotated to shift the image pickup direction, and the survey setting point is displayed when the image pickup device 3 is directed toward the survey setting point.

In this case, the survey setting point can be searched simply by rotating the pole 1, and it is easy to perform. Once the survey setting point can be detected on the image, the operation planning data can be superimposed on the pickup image and all survey setting points for pile driving can be displayed (Fig. 3 (C)). The next survey setting point can be easily displayed, and it is possible to identify the relation between the survey setting point first displayed and the other survey setting point.

To determine the final position of the pole 1, the coordinate image is displayed in the same manner as described above, and the position of the pole 1 is accurately aligned with the survey setting point.

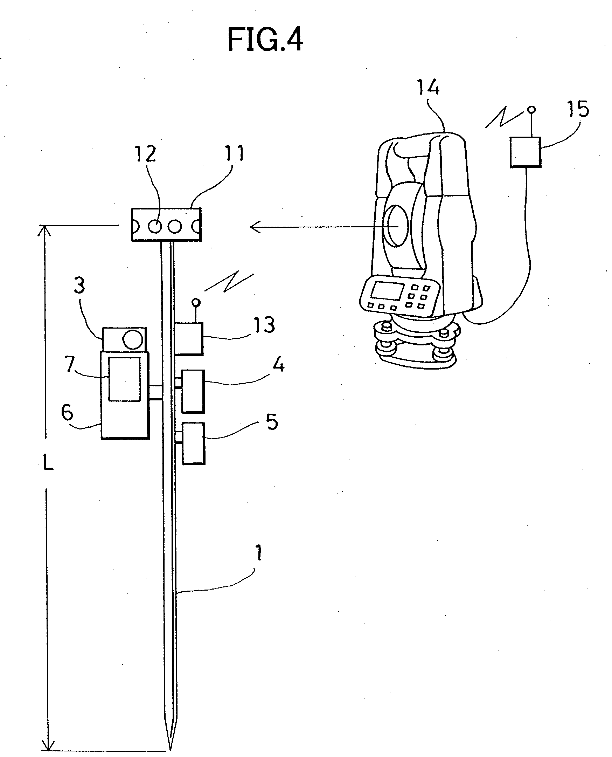

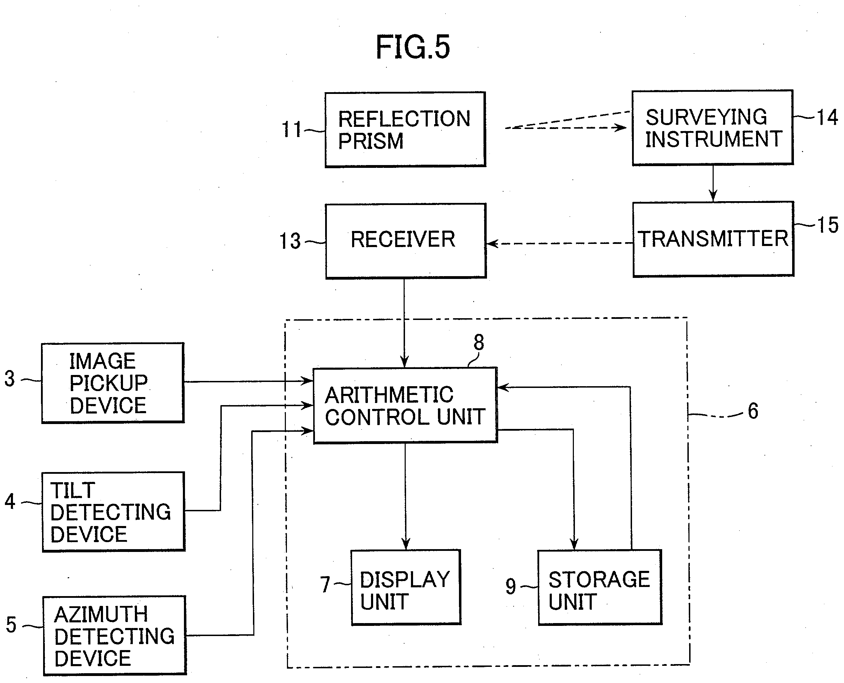

The means to measure the position of the pole 1 is not limited to the GPS system 2 as described above, and a surveying instrument may be used. Referring to Fig. 4 and Fig. 5, description will be given now on a second embodiment of the invention.

In Fig. 4 and Fig. 5, the same component as in Fig. 1 and Fig. 2 is referred by the same symbol, and detailed description is not given here.

A reflection prism 11 is provided on an upper end of the pole 1. On the circumference of the reflection prism 11, prisms 12 are arranged with equal spacing so that light beams entering the reflection prism 11 from all directions can be reflected toward the incident direction of each light beam.

On the pole 1, there are provided an image pickup device 3, a tilt detecting device 4, an azimuth detecting device, e.g. an azimuth angle sensor 5, an arithmetic processing unit 6, and a receiver 13 each at adequate position on the pole 1.

A surveying instrument 14 such as a total station is installed at a known point. The surveying instrument 14 comprises a tracking device (not shown), which can track the reflection prism 11. A transmitter 15 is mounted on the surveying instrument 14, and the data surveyed by the surveying instrument 14 can be transmitted to the receiver 13.

The distance and the azimuth of the pole 1 from the surveying instrument 14, i.e. a known point, can be measured by the surveying instrument 14. The results of the measurement are transmitted to the receiver 13 by the transmitter 15, and the transmitted data is inputted to the arithmetic processing unit 6. Based on the distance and the azimuth from the known point, the arithmetic processing unit 6 calculates a position of the reflection prism 11. The position of the reflection prism 11 is compensated by the distance L from the reflection prism 11 to the tapered point and by a tilt angle of the pole 1 detected by the tilt detecting device 4, and the position of the tapered point of the pole 1 (i.e. the position of the pole 1) is calculated.

The coordinate image, the positional data of the pole 1, the pickup image taken by the image pickup device 3 and the survey setting point (No. 12) are displayed on the display unit 7 based on the positional data of the pole 1 in the same manner as described above in the first embodiment.

When the operator moves and the pole 1 is moved, the reflection prism 11 is tracked by the surveying instrument 14. The position of the pole 1 is measured at real time, and the surveying data is transmitted to the receiver 13 via the transmitter 15. Thus, the survey setting point targeted for the operation is displayed on the coordinate image and the pickup image, and the position of the pole 1 is displayed at real time.

For the receiver 13 and the transmitter 15, radio communication via electric wave or optical communication for transmitting communication data via optical modulation, etc. may be used.

In the embodiments as described above, an image in collimating direction is caught by the image pickup device 3, and the image is displayed on the display unit. Also, a symbol of the survey setting point is displayed by superimposing it on the image. For easier arrangement, a survey guiding system without using the image pickup device 3 may be used. Specifically, by using the position of the pole detected by the position measuring device as reference, a survey setting point existing in an azimuth direction detected by the azimuth detecting device is obtained according to the stored operation planning data, and the survey setting point thus obtained is displayed on the display unit. In this case, depending on the position and the direction of the pole, the survey setting point is displayed graphically and 3-dimensionally. Thus, the survey guiding system can be obtained as a system at lower cost.

The present invention provides a survey guiding system, comprising a pole and a position measuring device for measuring a position of the pole, wherein there are provided a display device provided on the pole, a storage device for storing a survey setting point as operation planning data, an azimuth detecting device installed on the pole and used for detecting an azimuth angle of a collimating direction, and an arithmetic control device for calculating the survey setting point existing in the collimating direction based on the measured position of the pole and the operation planning data and the collimating direction detected, wherein the calculated survey setting point is displayed on the display device. As a result, the operation can be carried out by a single operator, who supports and moves the pole. This contributes to labor-saving, to the reduction of the burden on the operator and to the improvement of working efficiency.

## Claims

1. A survey guiding system, comprising a pole (1) and a position measuring device (2; 11, 12, 13, 14, 15) for measuring a position of said pole (1), comprising a display device (7) provided on said pole, a storage device (9) for storing a survey setting point as operation planning data, an azimuth detecting device (5) installed on said pole (1) and used for detecting an azimuth angle of a collimating direction, an arithmetic control device (8) for calculating the survey setting point existing in the collimating direction based on the measured position of said pole (1) and the operation planning data and the collimating direction detected,
**characterized by** an image pickup device (3) provided on said pole and for taking an image in the collimating direction, wherein an image is displayed which is selected between said image taken by said image pickup device (3) or a coordinate image in the collimating direction as obtained from the operation planning data on said display device (7), and the operation planning data or the calculated survey setting point is displayed on said display device (7) by superimposing.

2. A survey guiding system according to claim 1, wherein said position measuring device is a GPS system (2) mounted on said pole (1).

3. A survey guiding system according to claim 1, wherein said position measuring device (11, 12, 13, 14, 15) comprising a reflection prism (11) provided on said pole (1), and a surveying instrument (14) for measuring a position of said reflection prism (11).

4. A survey guiding system according to claim 2 or 3, wherein a tilt detecting device (4) for detecting tilting of said pole (1) with respect to a vertical line is provided on said pole (1), and the measuring position of said position measuring device (2; 11, 12, 13, 14, 15) is compensated based on the tilt detected by said tilt detecting device (4).

## Patentansprüche

1. Vermessungsleitsystem, aufweisend einen Mast (1) und eine Positionsmessvorrichtung (2; 11, 12, 13, 14, 15) zum Messen einer Position des Masts (1), aufweisend eine am Mast vorgesehene Anzeigevorrichtung (7), eine Speichervorrichtung (9) zum Speichern eines Vermessungssollwerts als Betriebsplanungsdaten, eine Detektionsvorrichtung (5) für einen Richtungswinkel, die am Mast (1) installiert ist und zum Detektieren eines Richtungswinkels einer kollimierenden Richtung verwendet wird, eine arithmetische Steuervorrichtung (8) zum Berechnen des in der kollimierenden Richtung bestehenden Vermessungssollwerts auf der Grundlage der gemessenen Position des Masts (1) und der Betriebsplanungsdaten und der detektierten kollimierenden Richtung,
**gekennzeichnet durch** eine Bildaufnahmevorrichtung (3), die am Mast und für das Aufnehmen eines Bilds in der kollimierenden Richtung vorgesehen ist, wobei auf der Anzeigevorrichtung (7) ein Bild angezeigt wird, das zwischen dem von der Bildaufnahmevorrichtung (3) aufgenommenen Bild oder einem aus den Betriebsplanungsdaten erhaltenen Koordinatenbild in der kollimierenden Richtung ausgewählt ist, und die Betriebsplanungsdaten oder der berechnete Vermessungssollwert auf der Anzeigevorrichtung (7) **durch** Überlagern angezeigt werden/wird.

2. Vermessungsleitsystem nach Anspruch 1, wobei die Positionsmessvorrichtung ein am Mast (1) angebrachtes GPS-System (2) ist.

3. Vermessungsleitsystem nach Anspruch 1, wobei die Positionsmessvorrichtung (11, 12, 13, 14, 15) ein am Mast (1) vorgesehenes Reflexionsprisma (11) und ein Vermessungsinstrument (14) zum Messen einer Position des Reflexionsprismas (11) aufweist.

4. Vermessungsleitsystem nach Anspruch 2 oder 3, wobei am Mast (1) eine Neigungsdetektionsvorrichtung (4) zum Detektieren eines Neigens des Masts (1) in Bezug auf eine vertikale Linie vorgesehen ist und die Messposition der Positionsmessvorrichtung (2; 11, 12, 13, 14, 15) auf der Grundlage der von der Neigungsdetektionsvorrichtung (4) detektierten Neigung kompensiert wird.

## Revendications

1. Système de guidage topographique, comprenant un poteau (1) et un dispositif de mesure de position (2 ; 11, 12, 13, 14, 15) pour mesurer une position dudit poteau (1), comprenant un dispositif d'affichage (7) fourni sur ledit poteau, un dispositif de stockage (9) pour mémoriser un point de consigne topographique comme donnée de planification d'opération, un dispositif de détection d'azimuth (5) installé sur ledit poteau (1) et utilisé pour détecter un angle d'azimuth d'une direction de collimation, un dispositif de contrôle arithmétique (8) pour calculer le point de consigne topographique dans la direction de collimation en fonction de la position mesurée dudit poteau (1), des données de planification d'opération et de la direction détectée,
**caractérisé par** un dispositif de saisie d'image (3) fourni sur ledit poteau pour prendre une image dans la direction de collimation, une image s'affichant qui est prise par ledit dispositif de saisie d'image (3) ou une image coordonnée dans la direction de collimation comme obtenue à partir des données de planification d'opération sur ledit dispositif d'affichage (7), et les données de planification d'opération ou le point de consigne topographique calculé s'affichant sur ledit dispositif d'affichage (7) par superposition.

2. Système de guidage topographique selon la revendication 1, dans lequel ledit dispositif de mesure de position est un système GPS (2) monté sur ledit poteau (1).

3. Système de guidage topographique selon la revendication 1, dans lequel ledit dispositif de mesure de position (11, 12, 13, 14, 15) comprenant un prisme de réflexion (11) fourni sur ledit poteau (1) et un instrument topographique (14) pour mesurer une position dudit prisme de réflexion (11).

4. Système de guidage topographique selon la revendication 2 ou 3, dans lequel un dispositif de détection d'inclinaison (4) pour détecter l'inclinaison dudit poteau (1) par rapport à une ligne verticale est fourni sur ledit poteau (1), et dans lequel la position de mesure dudit dispositif de mesure de position (2 ; 11, 12, 13, 14, 15) est compensée en fonction de l'inclinaison détectée par ledit dispositif de détection d'inclinaison (4).
